(19) Europäisches Patentamt
European Patent Office
Office européen des brevets

(11) **EP 2 631 802 B1**

(12) **EUROPÄISCHE PATENTSCHRIFT**

(45) Veröffentlichungstag und Bekanntmachung des Hinweises auf die Patenterteilung:
**19.11.2014 Patentblatt 2014/47**

(51) Int Cl.:
**G06F 11/00** *(2006.01)*   **G06F 11/07** *(2006.01)*
**G06F 11/10** *(2006.01)*

(21) Anmeldenummer: **12156426.4**

(22) Anmeldetag: **22.02.2012**

(54) **Verfahren zur Speicherung und Propagation von Fehlerinforationen in Computer-Programmen**

Method for storing and propagating error information in computer programs

Procédé d'enregistrement et de propagation d'informations erronées dans des programmes informatiques

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.08.2013 Patentblatt 2013/35**

(73) Patentinhaber: **Siemens Aktiengesellschaft 80333 München (DE)**

(72) Erfinder:
• **Witte, Karl-Hermann**
  **90482 Nürnberg (DE)**
• **Richter, Jan, Dr.**
  **91207 Lauf a. d. Pegnitz (DE)**
• **Schenk, Andreas**
  **91052 Erlangen (DE)**

(56) Entgegenhaltungen:
**EP-A2- 1 892 639    DE-A1-102009 037 630**

**Beschreibung**

Die Erfindung betrifft ein Verfahren zur Speicherung und Propagation von Fehlerinformationen in Computer-Programmen gemäß dem Oberbegriff des Patentanspruchs 1.

In sicherheitsgerichteten Programmen für industrielle Anwendungen, die typischerweise auf eingebetteter Hardware wie z.B. Speicherprogrammierbaren Steuerungen (SPS) ablaufen, muss sichergestellt werden, dass die im Programmablauf entdeckte Fehlerinformation sicher bis zum Ende des Programmlaufes bzw. bis zum Ende eines Zyklus' erhalten bleibt, damit die am Ende des Programmlaufes bzw. Zyklus durchlaufenen Routinen für Fehlerreaktionen mit Sicherheit ausgelöst werden. Die Speicherung und Erhaltung der Fehlerinformation bis zum Ende des Programms wird allgemein als Fehlerpropagation bezeichnet.

In den sicherheitsgerichteten Programmen werden wichtige Variablen codiert verarbeitet; dieses Vorgehen ist auch als "Coded Processing" bekannt. Dazu werden Werte (xf) in Variablen mittels AN-, ANB- (AN+B), ANBD- Codes oder durch artverwandte Codes (Mischverfahren) codiert. Dabei werden alle numerischen Variablen nach einer Vorschrift der Form

$$(1) \qquad xc = A*xf + B\_x + D$$

codiert, und die arithmetischen Operationen (+,-,*,/, usw.) werden so angepasst, dass die Verarbeitung im codierten Bereich (xc) konsistente Ergebnisse zum Ur-Bereich (xf) liefert (dabei können B_x oder D durchaus auch den Wert Null haben).

Mittels der codierten Variablen ist es möglich, Fehler festzustellen, die beispielsweise durch eine zufällige Änderung bzw. Verfälschung einzelner Bits entstehen. Dies bedeutet, dass die zu codierenden Werte so auf codierte Werte abgebildet werden, dass Abweichung einzelner Bits erkannt werden können, indem Fehler in einzelnen Bits beispielsweise aufgrund des Hamming-Abstandes zulässiger codierter Werte ungültige Werte im codierten Raum entstehen lassen. Dabei kann weiter eine doppelte Speicherung und Verarbeitung der Werte, nämlich einmal in codierter Form und einmal in uncodierter Form, stattfinden, wobei zur jeweiligen Kontrolle der Wert aus der codierten Variablen extrahiert und mit dem uncodiert geführten Wert verglichen wird.

Zur Kontrolle eines Programmlaufes werden im Stand der Technik Laufvariablen, sog. "Tracer", eingesetzt, mit deren Inhalt der durchlaufene Programmpfad protokolliert und somit überprüft werden kann.

Die Druckschrift DE 10 2009 037 630 A1 - Ingimundarson "Elektronische Vorrichtung und Verfahren zur Überprüfung der korrekten Programmausführung" schlägt zur Lösung des Problems den Einsatz einer separaten Hardware-Einrichtung vor, die permanent einen bei der Programmausführung erzeugten Püfwert mit einem bei der Programmerstellung vorgegebenen Sollwert erzeugt, wobei Abweichungen zwischen dem Prüfwert und dem Sollwert auf eine fehlerhafte Programmausführung hinweisen.

Die Druckschrift EP 1 892 639 A2 - Stecker et al. "Sichere Programmcodeausführung" offenbart ebenso den Vergleich von Früfwerten, die bei der Programmausführung generiert werden, mit Sollwerten, wobei hier jedoch diese Prüfung durch eine Einrichtung eines mobilen Datenträgers, auf dem das ablaufende Programm gespeichert ist, erfolgt.

Während also für die Erkennung von Fehlern im Stand der Technik zahlreiche Ansätze existieren, sind die fehlersichere Bildung einer Fehlervariablen und deren Propagation nicht trivial. Es verbietet sich beispielsweise, für jeden Fehler oder alternativ in jedem Nicht-Fehlerfall eine Konstante zu einer Fehlervariablen zu addieren etc., weil solche Standard-Schritte von Compilern optimiert, also z.B. zusammengefasst, werden können, was die Sicherheit verringert.

Es ist daher eine Aufgabe der vorliegenden Erfindung, eine fehlersichere Propagation von Fehlern in Computerprogrammen vorzuschlagen.

Es ist ein zentraler Gedanke der erfindungsgemäßen Lösung der Aufgabe, dass als ein Container für die Fehlerpropagation eine Fehlervariable verwendet wird, deren Inhalt derart gebildet wird, dass eine Verfälschung erkannt werden kann und dass die Auswirkung verschiedener unabhängiger Fehler nicht zu einer gegenseitigen Kompensation führen kann. Dies wird erfindungsgemäß dadurch erreicht, dass Fehlerinformationen mit einem festgelegten Vorzeichen in die Fehlervariable propagiert werden. Eine weitere Absicherung, insbesondere gegen systematische Fehler und gegen intransparente und ungewünschte Optimierungen eines Compilers etc. werden dadurch vermieden, dass erfindungsgemäß der in die Propagationsvariable eingehende Wert aus dem Fehler, also der betragsmäßigen Abweichung von einem Sollzustand, abgeleitet wird.

Die Aufgabe wird insbesondere durch ein Verfahren gemäß dem Patentanspruch 1 gelöst. Dabei ist ein Verfahren zur Speicherung und Propagation von Fehlerinformationen in Computer-Programmen vorgesehen, bei dem eine global gültige Fehlervariable zur Speicherung und Propagation der Fehlerinformationen verwendet wird, wobei für jeden erkannten Fehler ein von Null verschiedener Wert für den Fehler als Fehlerinformation jeweils mit einem festgelegten Vorzeichen zu der Fehlervariable addiert wird, und wobei der Wert aus einer Abweichung des Inhalts einer codierten Variablen von einem

Erwartungswert gebildet wird. Durch diese Kombination und Verflechtung einer separaten globalen Propagationsvariablen mit aus einem Fehler abgeleiteten Werten, insbesondere durch festgestellte Abweichungen in den bekannten Fehlererkennungs- und Propagationswegen über Operationen und Oparanden im , "Coded Processing" wird eine erhöhte Propagationssicherheit erreicht.

Vorteilhafte Ausgestaltungen des erfindungsgemäßen Verfahrens sind in den abhängigen Patentansprüchen angegeben. Deren Merkmale können einzeln oder auch in Kombination miteinander eingesetzt werden.

Eine gute Erkennbarkeit von Fehlern, beispielsweise bei der "zufälligen" Verfälschung von Variablen, ergibt sich, wenn die codierte Variable mittels einer AN- oder AN+B- oder ANBD-Codierung oder mittels einer Mischform aus diesen Codierungen codiert ist.

Neben der Propagation von Fehlern in Variablen und Werten kann das Verfahren vorteilhaft auch zur Kontrolle eines Programmlaufs o.ä. eingesetzt werden, indem die Fehlervariable in zumindest einen oberen Bit-Bereich und einen unteren Bit-Bereich unterteilt ist, wobei der Wert jeweils in dem unteren Bit-Bereich summiert wird, und wobei ein Prüfwert in dem oberen Bit-Bereich summiert wird. Dabei wird vorteilhaft als der Prüfwert der Erwartungswert verwendet wird oder zumindest aus dem Erwartungswert gebildet.

Eine weitere Absicherung gegen systematische Fehler ergibt sich insbesondere für fehlersichere Programme der industriellen Automatisierungstechnik, wenn das Computerprogramm zumindest einen zyklisch durchlaufenen Ablauf umfasst, wobei die Fehlervariable zu Beginn eines Zyklus' mit einem Startwert initialisiert wird, und wobei bei verschiedenen Zyklen verschiedene Startwerte verwendet werden. Dabei soll in einer vorteilhaften Variante zumindest für die Dauer eines Zyklus' das festgelegte Vorzeichen nicht geändert werden.

Zur Auswertung der Fehlervariablen und damit zur Erkennung eines Fehlerereignisses wird vorteilhaft der Inhalt der Fehlervariablen mit einem Erwartungswert für den Inhalt der Fehlervariablen verglichen.

Eine schnelle und arithmetisch einfache Verarbeitung ergibt sich, wenn zur Bildung des Wertes die Abweichung des Inhalts der codierten Variablen mittels einer XOR-Verknüpfung mit dem Erwartungswert verknüpft wird.

Das Verfahren kann vorteilhaft zur Kontrolle eines Programmlaufs eingesetzt werden, indem zumindest in einem wesentlichen Programmteil bei dessen Abarbeitung jeweils eine Signatur errechnet und zu der codierten Variable addiert bzw. von dieser subtrahiert wird, und indem ein für einen ordnungsgemäßen Programmlauf bestimmter Erwartungswert für die Signatur von der codierten Variable subtrahiert bzw. zu dieser addiert wird, wobei die errechnete Signatur und der Erwartungswert einander im fehlerfreien Fall aufheben. Alternativ kann zu der Propagation des Fehlers die Addition (Subtraktion) der errechneten Signatur und zur Subtraktion (Addition) des Erwartungswertes für die Signatur auch die Fehlervariable (Propagationsvariable) verwendet werden.

Auch auf einfache, im Programm selbst erkannte Fehler können mittels des Verfahrens propagiert werden, indem zur Propagation solcher Fehler jeweils ein beispielsweise konstanter und von Null verschiedener Wert zu der Fehlervariablen addiert bzw. von dieser subtrahiert wird.

Ein Ausführungsbeispiel des erfindungsgemäßen Verfahrens soll nachfolgend erläutert werden; die hierbei diskutierten Varianten können auch in Kombination miteinander realisiert werden:

Als Propagationsvariable soll eine codierte Variable P betrachtet werden, die zu Beginn eines Programmlaufes geeignet initialisiert wird und die dazu verwendet wird, die Ergebnisse von Konsistenzprüfungen an einer codierten Nutzvariablen $x_c$ während des Programmablaufes aufzunehmen:

$$(1) \qquad x_c = A*xf + B\_x + D$$

Dabei stellen A, B_x und D zumindest für einen ProgrammZyklus Konstanten dar. Für A wird vorteilhaft eine hohe Primzahl verwendet, da damit zur Erkennung von Fehlern die modulo-Operation eingesetzt werden kann.

Ein Fehler liegt damit (vereinfacht) erkennbar vor, wenn der Inhalt der Variablen $x_c$ erkennbar von der Form (1) abweicht, also wenn gilt:

$$x_F = (x_c - D) \ modulo \ A \neq B\_x$$

o.B.d.A. gilt $x_F \geq 0$ (z.B. durch Verwendung des entsprechenden modulo-Befehls vom Rechenwerk).

Dabei stellt B_x den Erwartungswert dar, also den Wert der modulo-Operation im fehlerfreien Fall. Abweichungen von B_x sind somit als Fehler zu betrachten.

Im einem Programmlauf bzw. in einem Zyklus eines Programms liegt der Fehler dann häufig sowohl positiv als auch negativ als auch in vielerlei Weise verfremdet vor. Die bloße Addition (alternativ: bloße Subtraktion) der fehlerbehafteten Werte könnte daher oft zum Verlust der Erkennbarkeit von Fehlern führen. Das Verfahren verhindert diesen Verlust, indem vorab festgelegt wird, in welche Richtung (positiv oder negativ) und mit wie vielen Bits sich ein Fehler auswirken darf.

Der erste Wert für die Erkennbarkeit ist ein zufälliger Wert $X_F$ zwischen 0 und A. $X_F$ - B x kann somit sowohl positiv als auch negativ sein. Da aber nur die Erkennbarkeit eines Fehlers interessiert, wird einfach statt der Subtraktion die XOR-Verknüpfung verwendet:

für $x_F = B\_x$ gilt:     $x_F$ XOR $B\_x = 0$ (fehlerfreier Fall)

für $x_F \neq B\_x$ gilt:     $x_F$ XOR $B\_x > 0$ (da $x_F \geq 0$ und $B\_x > 0$)

und

$$X_F \text{ XOR } B\_x < 2\text{^}n \text{ wenn } A < 2\text{^}n$$

Wenn nun ein Fehler sowohl in seiner positiven als auch in seiner negativen Form propagiert wird, dann werden 2 positive Werte addiert. Die Summe 2-er positiver Werte ist immer ungleich Null. Eine Kompensation kann daher erst durch einen Überlauf im Zahlenring des Rechenwerkes erfolgen. Es sollten daher genügend obere Bits zur Verfügung stehen.

Die Übergabe der Ergebnisse von solchen Konsistenzprüfungen anhand der beschriebenen "modulo"-Operation soll dabei an regelmäßigen Prüf-Punkten (z.B. nach jeder codierten Operation) so erfolgen, dass eine unbeabsichtigte Kompensation bereits vorhandener Fehlerinformationen vermieden wird. Dies wird durch beschriebene additive (alternativ: subtraktive) Kumulation von Fehlerinformationen mit positivem Vorzeichen erreicht.

Nachfolgend wird ein Beispiel für die Propagation in einen 32-Bit Wert P mit der Verwendung von 16-Bit-Signaturen beschrieben:

$$(2) \qquad x_F = (x_c - D) \bmod A$$

Der Erwartungswert von $X_F$ ist $B_x$. Die Fehlerinformation entspricht der Differenz zwischen $X_F$ und $B_x$.

$$(3) \qquad x_P = (x_F \ \& \ 2^{16} - 1) \text{ XOR } (B_x \cdot (2^{16} + 1))$$

Hierbei wird zur späteren Addition (alternativ: Subtraktion) als Prüfwert der Wert $B_x$ in die oberen 16 Bit geschoben; dies kann zur Kontrolle des Programmlaufs genutzt werden, indem beispielsweise kontrolliert wird, ob der Anzahl der Prüfvorgänge einem Erwartungswert entspricht.

Grundsätzlich muss sichergestellt werden, dass die Fehlerinformation (Differenz zwischen dem Erwartungswert von $x_F$ und $x_F$) immer positiv (bzw. alternativ immer negativ) in die Propagation eingeht, damit Kompensationseffekte ausgeschlossen sind.)

Wegen der Codierungsvorschrift (1) gilt im fehlerfreien Fall

$$(4) \qquad x_P = B_x \cdot 2^{16}$$

Bei jeder Operation wird die Fehlerinformation (3) gebildet und auf die Propagationsvariable P addiert, sodass

$$(5) \qquad P = \sum_{i=1}^{OpAnzahl} x_{P,i}$$

Am Ende des Programmzyklus muss die Propagationsvariable $P_{end}$ einem zu erwartenden Wert Pe entsprechen:

$$(6) \qquad P_{end} \overset{!}{=} P_e$$

Der zu erwartende Wert kann von einem Encoder oder Compiler zur Übersetzungszeit ermittelt werden und folglich in einer abschließenden Konsistenzprüfung der Form (6) überprüft werden. Damit wird ein zusätzlicher Propagationsweg zum bereits bekannten Propagationsweg in die codierten Ausgabewerte geschaffen. Außerdem deckt dieser Mechanismus fehlende Updates der Propagationsvariable P auf, wodurch eine Programmlaufkontrolle realisierbar ist.

In einer vorteilhaften Ausprägung der Erfindung wird die Propagation von Fehlerinformationen $X_F$ nicht bei jeder Operation durchgeführt, sondern nur vor Operationen, die ein erhöhtes Propagations-Verlustrisiko bedingen (wie z.B. Multiplikation, Division). Ketten propagationssicherer Operationen wie Addition haben für die meisten Zwecke hinreichend gute Propagationseigenschaften, sodass auf die Schritte (3) und (5) verzichtet werden kann, bis eine propagationskritische Operation erfolgt. Diese Ausprägung führt zu verbesserter Performanz gegenüber einer Aktualisierung der Propagationsvariablen bei jeder Operation.

Die Propagation kann vorteilhaft bei alternativen Abläufen in einem Pfad konstant korrigiert werden. Hierzu wird die Differenz der Erwartungswerte für die Propagationsvariable am Ende des alternativen Pfades auf die Propagationsvariable addiert.

In einer Ausprägung der Erfindung wird die Propagationsvariable zu jedem Zyklenbeginn dynamisch initialisiert, z.B. durch Initialisierung mit der dynamischen Signatur D.

In einer weiteren Ausprägung der Erfindung wird das Vorzeichen der Fehlerinformation $x_P$ dynamisch verändert. Das Vorzeichen kann nur beim Zyklenwechsel verändert werden (also innerhalb jedes Zyklus gleich sein), oder alternativ auch innerhalb eines Zyklus verändert werden, wobei in letzterem Fall Vorsorge dafür getroffen werden muss, dass eine ungewünschte Kompensation nicht erfolgen kann, beispielsweise durch eine zwischenzeitliche Auswertung der Propagationsvariable P gemäß (6).

In vorteilhaften Varianten können Verfahren zur Fehlererkennung mit den zuvor beschriebenen Varianten des Verfahrens zur Fehlerpropagation kombiniert werden. Dazu ist in einer vorteilhaften Ausgestaltung die Propagation einer berechneten Signatur S in eine geeignete codierte Variable $x_c$ möglich, wobei für S ein eindeutiger Erwartungswert Se existiert:

$$x_c \; = \; x_c \; - \; S_e \; + \; S$$

Diese Variante ist kann besonders vorteilhaft für die Programmlaufabsicherung eingesetzt werden, beispielsweise, indem als Signatur S eine Programmlaufvariable ("Tracer") verwendet wird, der bei korrektem Ablauf immer ein eindeutiger Wert für jeden Basisblock eines Programms zugewiesen wird. Durch eine Kombination der Programmlaufvariablen mit dem Verfahren zur Fehlerpropagation wird die Wirksamkeit der Programmlaufabsicherung erhöht und gleichzeitig die Systemunabhängigkeit (Compiler, Betriebssystem, Hardware) verbessert.

Alternativ ist eine Propagation der berechneten Signatur S oder der Programmlaufvariablen direkt mittels der Propagationsvariablen P möglich, wobei für S ein eindeutiger Erwartungswert $S_e$ existiert:

$$P \; = \; P \; + \; ((S \bmod A) \; XOR \; ((S_e \bmod A) \; * \; (2^{16} + 1)))$$

Hinweis: Wenn der Zahlenbereich von S größer ist als der gewünschte Zahlenbereich für die Propagation, dann kann der Zahlenbereich leicht verkleinert werden, z.B. so:

$$S' \; = \; (S \; XOR \; S \; / \; 2^{16}) \; AND \; (2^{16}-1)$$

Schließlich ist auch eine direkte Beeinflussung der Propagationsvariablen P zur "Meldung" eines Fehlers möglich:

```
IF (Fehler)
THEN
  P = P+1
```

Anstelle der Addition wird bei "negativer Fehlerlogik" dann eine Subtraktion verwendet. Anstelle der Konstanten "1" können auch andere Werte addiert bzw. subtrahiert werden, die dann vorteilhaft mehrere Bits der Propagationsvariablen verändern.

**Patentansprüche**

1. Verfahren zur Speicherung und Propagation von Fehlerinformationen in Computer-Programmen,
   **dadurch gekennzeichnet,**
   **dass** eine global gültige Fehlervariable zur Speicherung und Propagation der Fehlerinformationen verwendet wird,
   **dass** für jeden erkannten Fehler ein von Null verschiedener Wert für den Fehler als Fehlerinformation jeweils mit einem festgelegten Vorzeichen zu der Fehlervariable addiert wird, wobei der Wert aus einer Abweichung des Inhalts einer codierten Variablen von einem Erwartungswert gebildet wird.

2. Verfahren nach Patentanspruch 1,
   **dadurch gekennzeichnet,**
   **dass** die codierte Variable mittels einer AN- oder AN+B- oder ANBD-Codierung oder mittels einer Mischform aus diesen Codierungen codiert ist.

3. Verfahren nach einem der vorhergehenden Patentansprüche, **dadurch gekennzeichnet,**
   **dass** die Fehlervariable in zumindest einen oberen Bit-Bereich und einen unteren Bit-Bereich unterteilt ist,
   wobei der Wert jeweils in dem unteren Bit-Bereich summiert wird, und
   wobei ein Prüfwert in dem oberen Bit-Bereich summiert wird.

4. Verfahren nach Patentanspruch 3,
   **dadurch gekennzeichnet,**
   **dass** als Prüfwert der Erwartungswert verwendet wird oder zumindest aus dem Erwartungswert gebildet wird.

5. Verfahren nach einem der vorhergehenden Patentansprüche,
   **dadurch gekennzeichnet,**
   **dass** das Computerprogramm zumindest einen zyklisch durchlaufenen Ablauf umfasst, wobei die Fehlervariable zu Beginn eines Zyklus' mit einem Startwert initialisiert wird, und wobei bei verschiedenen Zyklen verschiedene Startwerte verwendet werden.

6. Verfahren nach Patentanspruch 5,
   **dadurch gekennzeichnet,**
   **dass** zumindest für die Dauer eines Zyklus' das festgelegte Vorzeichen nicht geändert wird.

7. Verfahren nach einem der vorhergehenden Patentansprüche,
   **dadurch gekennzeichnet,**
   **dass** als das Computerprogramm ein Automatisierungsprogramm einer fehlersicheren Automatisierungskomponente einer industriellen Automatisierungsanordnung verwendet wird.

8. Verfahren nach einem der vorhergehenden Patentansprüche,
   **dadurch gekennzeichnet,**
   **dass** zur Erkennung eines Fehlerereignisses der Inhalt der Fehlervariablen mit einem Erwartungswert für den Inhalt der Fehlervariablen verglichen wird.

9. Verfahren nach einer der vorhergehenden Patentansprüche,
   **dadurch gekennzeichnet,**
   **dass** zur Bildung des Wertes die Abweichung des Inhalts der codierten Variablen mittels einer XOR-Verknüpfung mit dem Erwartungswert verknüpft wird.

10. Verfahren nach einer der vorhergehenden Patentansprüche,
    **dadurch gekennzeichnet,**
    **dass** zur Kontrolle eines Programmlaufs zumindest in einem wesentlichen Programmteil bei dessen Abarbeitung jeweils eine Signatur errechnet und zu der codierten Variable addiert bzw. von dieser subtrahiert wird, und
    **dass** ein für einen ordnungsgemäßen Programmlauf bestimmter Erwartungswert für die Signatur von der codierten Variable subtrahiert bzw. zu dieser addiert wird, wobei die errechnete Signatur und der Erwartungswert einander im fehlerfreien Fall aufheben.

**11.** Verfahren nach einer der vorhergehenden Patentansprüche,
**dadurch gekennzeichnet,**
**dass** zur Kontrolle eines Programmlaufs zumindest in einem wesentlichen Programmteil bei dessen Abarbeitung jeweils eine Signatur errechnet und zu der Fehlervariable addiert bzw. von dieser subtrahiert wird, und
**dass** ein für einen ordnungsgemäßen Programmlauf bestimmter Erwartungswert für die Signatur von der Fehlervariable subtrahiert bzw. zu dieser addiert wird, wobei die errechnete Signatur und der Erwartungswert einander im fehlerfreien Fall aufheben.

**12.** Verfahren nach einer der vorhergehenden Patentansprüche,
**dadurch gekennzeichnet,**
**dass** zur Propagation eines Fehlers ein konstanter Wert zu der Fehlervariablen addiert bzw. von dieser subtrahiert wird.

**Claims**

**1.** Method for storing and propagating error information in computer programs,
**characterized**
**in that** a globally valid error variable is used for storing and propagating the error information,
**in that** for each recognized error a nonzero value for the error is added to the error variable as error information with a respective stipulated arithmetic sign, the value being formed from a discrepancy in the content of a coded variable from an expected value.

**2.** Method according to Patent Claim 1,
**characterized**
**in that** the coded variable is coded by means of AN or AN+B or ANBD coding or by means of a hybrid form comprising these codings.

**3.** Method according to either of the preceding patent claims,
**characterized**
**in that** the error variable is divided into at least an upper bit range and a lower bit range,
wherein the value is summed in the lower bit range each time, and
wherein a check value is summed in the upper bit range.

**4.** Method according to Patent Claim 3,
**characterized**
**in that** the check value used is the expected value or the check value is at least formed from the expected value.

**5.** Method according to one of the preceding patent claims,
**characterized**
**in that** the computer program comprises at least one cyclically executed procedure, wherein the error variable is initialized with a starting value at the beginning of a cycle, and
wherein different starting values are used for different cycles.

**6.** Method according to Patent Claim 5,
**characterized**
**in that** the stipulated arithmetic sign is not changed at least for the duration of one cycle.

**7.** Method according to one of the preceding patent claims,
**characterized**
**in that** the computer program used is an automation program for a failsafe automation component in an industrial automation arrangement.

**8.** Method according to one of the preceding patent claims,
**characterized**
**in that** an error event is recognized by comparing the content of the error variable with an expected value for the content of the error variable.

**9.** Method according to one of the preceding patent claims,
**characterized**
**in that** the value is formed by logically combining the discrepancy in the content of the coded variable with the expected value by means of an XOR function.

**10.** Method according to one of the preceding patent claims,
**characterized**
**in that** a program run is verified by calculating a signature and adding it to the coded variable or subtracting it therefrom each time at least in an essential program portion when the latter is executed, and
**in that** an expected value for the signature as intended for a proper program run is subtracted from the coded variable or added thereto, with the calculated signature and the expected value canceling one another out in the error-free case.

**11.** Method according to one of the preceding patent claims,
**characterized**
**in that** a program run is verified by calculating a signature and adding it to the error variable or subtracting it therefrom each time at least in an essential program portion when the latter is executed, and
**in that** an expected value for the signature as intended for a proper program run is subtracted from the error variable or added thereto, with the calculated signature and the expected value canceling one another out in the error-free case.

**12.** Method according to one of the preceding patent claims
**characterized**
**in that** an error is propagated by adding a constant value to the error variable or subtracting it therefrom.

**Revendications**

**1.** Procédé d'enregistrement et de propagation d'informations erronées dans des programmes informatiques,
**caractérisé**
**en ce qu'**on utilise une variable d'erreur valable globalement pour l'enregistrement et la propagation des informations erronées,
**en ce que**, pour chaque erreur détectée, on ajoute, comme information erronée, une valeur de l'erreur différente de zéro et ayant respectivement un signe fixé, à la variable d'erreur, dans lequel la valeur est formée d'un écart du contenu d'une variable codée à une valeur escomptée.

**2.** Procédé suivant la revendication 1,
**caractérisé**
**en ce qu'**on code la variable codée au moyen d'un codage AN ou AN+B ou ANBD ou au moyen d'une forme mixte de ces codages.

**3.** Procédé suivant l'une des revendications précédentes,
**caractérisé**
**en ce qu'**on subdivise la variable erronée en au moins une partie de bit supérieure ou en une partie de bit inférieure, on somme la valeur respectivement dans la partie de bit inférieure, et
dans lequel on somme une valeur de contrôle dans la partie de bit supérieure.

**4.** Procédé suivant la revendication 3,
**caractérisé**
**en ce qu'**on utilise la valeur escomptée comme valeur de contrôle ou du moins on la forme à partir de la valeur escomptée.

**5.** Procédé suivant l'une des revendications précédentes,
**caractérisé**
**en ce que** le programme informatique comprend un déroulement s'effectuant cycliquement, la variable erronée étant initialisée au début d'un cycle par une valeur de départ, et dans lequel on utilise des valeurs de départ différentes pour des cycles différents.

**6.** Procédé suivant la revendication 5,
**caractérisé**
**en ce qu'**on ne change pas le signe fixé, au moins pendant la durée d'un cycle.

**7.** Procédé suivant l'une des revendications précédentes,
**caractérisé**
**en ce qu'**on utilise, comme programme informatique, un programme d'automatisation d'un composant d'automatisation, sécurisé vis-à-vis des erreurs, d'un agencement d'automatisation industrielle.

**8.** Procédé suivant l'une des revendications précédentes,
**caractérisé**
**en ce que**, pour détecter un événement d'erreur, on compare le contenu des variables erronées à une valeur escomptée du contenu des variables erronées.

**9.** Procédé suivant l'une des revendications précédentes,
**caractérisé**
**en ce que**, pour former la valeur, on combine logiquement l'écart du contenu des variables codées à la valeur escomptée au moyen d'une combinaison logique OU exclusif.

**10.** Procédé suivant l'une des revendications précédentes,
**caractérisé**
**en ce que**, pour le contrôle d'un déroulement de programme, on calcule, au moins dans une partie essentielle du programme, lors de son déroulement, respectivement une signature et on l'ajoute à la variable codée ou on l'en soustrait, et
**en ce que**, pour un bon déroulement du programme, on soustrait une valeur escomptée déterminée pour la signature de la variable codée ou l'y ajoute, la signature calculée et la valeur escomptée se compensant l'une l'autre, dans le cas où il n'y a pas d'erreur.

**11.** Procédé suivant l'une des revendications précédentes,
**caractérisé**
**en ce que**, pour le contrôle d'un déroulement de programme, on calcule, au moins dans une partie essentielle du programme, lors de son déroulement, respectivement une signature et on l'ajoute à la variable d'erreur ou on l'en soustrait, et
**en ce que**, pour un bon déroulement du programme, on soustrait une valeur escomptée déterminée pour la signature de la variable d'erreur ou l'y ajoute, la signature calculée et la valeur escomptée se compensant l'une l'autre, dans le cas où il n'y a pas d'erreur.

**12.** Procédé suivant l'une des revendications précédentes,
**caractérisé**
**en ce que**, pour la propagation d'une erreur, on ajoute une valeur constante à la variable d'erreur ou on l'en soustrait.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009037630 A1

- EP 1892639 A2, Stecker